# EUROPÄISCHE PATENTSCHRIFT

(11) **EP 2 049 307 B1**
(45) Veröffentlichungstag und Bekanntmachung des Hinweises auf die Patenterteilung: **26.10.2011**
(21) Anmeldenummer: 07787028.5
(22) Anmeldetag: 04.07.2007
(51) Int. Cl.: B25B 21/00, B60T 17/04, F16B 23/00, F16L 41/10

(54) **AGGREGAT MIT WENIGSTENS ZWEI DARAN BEFESTIGTER HYDRAULIKANSCHLÜSSE**
UNIT WITH AT LEAST TWO HYDRAULIC CONNECTIONS FASTENED TO IT
UNITÉ COMPRENANT AU MOINS DEUX RACCORDS HYDRAULIQUES

(30) Priorität: 26.07.2006 DE 102006035220; 23.12.2006 DE 102006061461
(43) Veröffentlichungstag der Anmeldung: 22.04.2009
(73) Patentinhaber: Continental Teves AG & Co. OHG, 60488 Frankfurt (DE)
(72) Erfinder: HINZ, Axel, 61267 Neu-Anspach (DE); FEIGEL, Hans-Jörg, 61191 Rosbach (DE); GREIFF, Uwe, 61352 Bad Homburg (DE); FISCHBACH-BORAZIO, Petra, 60488 Frankfurt/M (DE)
(86) Internationale Anmeldenummer: PCT/EP2007/056708
(87) Internationale Veröffentlichungsnummer: WO 2008/012176

(56) Entgegenhaltungen:
- DE-A1- 2 352 380
- DE-A1- 10 060 391
- DE-A1- 10 103 175
- DE-A1- 19 743 185
- DE-U- 1 886 745
- JP-A- 8 004 973
- JP-A- 8 019 968
- US-A- 4 267 870

## Beschreibung

Die Erfindung betrifft ein Aggregat mit wenigstens zwei mittels Schraubarmaturen daran befestigter Hydraulikanschlüsse, welche in einem definierten Abstand parallel zueinander vorgesehen sind.

Bei dem Aggregat handelt es sich bevorzugt um ein Hydraulikaggregat mit einer komplexen Verbohrung, umfassend weitere Komponenten wie eine motorgetriebene Pumpe und Ventile zur Fahrwerk- und- oder Bremsenregelung, wobei prinzipiell auch vergleichbare Aggregate nämlich ein Bremsbetätigungsaggregat angesprochen sein kann. Die Anschlusskomponente ist bevorzugt als Rohr oder Schlauch mit einer Schraubarmatur gestaltet, wobei sich die Schraubarmaturen in dem genannten, vordefinierten Abstand zueinander befinden. Dabei verfügt jede Schraubarmatur prinzipiell über ein Außengewinde, das in einer Aufnahmebohrung mit einem Innengewinde im Aggregat aufgenommen ist. Weil es eine generelle Anforderung des beschriebenen Aggregates ist, eine möglichst geringe Baugröße im Kraftfahrzeug zu beanspruchen, richtet sich auch die Platzierung der Aufnahmebohrung maßgeblich danach, wie eine möglichst geringe Aggregatgröße (Miniaturisierung) erzielt werden kann.

Prinzipiell besteht also eine Hauptbestrebung darin, die Aufnahmebohrungen mit den Innengewinden zur Aufnahme der Anschraubkomponenten in einem möglichst geringem Abstand zueinander anzuordnen.

Diese prinzipielle Bestrebung findet jedoch ihre Grenze in den großserientechnischen Montagebedingungen zum Anschrauben der Schraubarmaturen. Denn wenn der definierte Abstand zwischen den Aufnahmebohrungen zu gering bemessen wird, ist nicht ausreichend Platz vorhanden, um beispielsweise einen pneumatischen oder elektromotorischen Schraubkopf mit einem ausreichend dimensionierten Schraubwerkzeug an der Schraubarmatur anzusetzen. Diese Problematik wird noch dadurch verstärkt, dass der Schrauber wegen der abgehenden Rohr- oder Schlauchachse seitlich, also rechtwinklig zur Schlauchachse, angesetzt werden muss.

Zumeist finden Druckluftschrauber Verwendung, die neben einem eigentlichen Werkzeughalter noch Energieversorgungsmittel (Schlauch, Kabel) umfassen, und für die der bereitgestellte Einbauraum vielfach nicht ausreicht. Als schwerwiegende Folge eines beschränkten Montageraumes kann es zu Fehlmontagen kommen.

Es ist jedoch weder befriedigend noch sinnvoll, ein Aggregat mit Aufnahmebohrungen zu versehen, die vorsätzlich - und vielleicht nur aus Montagegründen - in einem größeren Abstand zueinander angeordnet sind, als zwingend erforderlich. Denn diese Maßnahme würde für sich alleine betrachtet zu einer unnötigen Aggregatvergrößerung führen.

In vergleichbarem Zusammenhang wurde von der Anmelderin gemäß DE 197 43 185 A1 ein Adapter mit definierten Aufnahmen für Bremsrohrleitungen vorgeschlagen. Derartige Anordnungen lassen sich nicht einfach und flexibel im Sinne von einem Baukasten an unterschiedliche Bohrungsplatzierungen anpassen. Vielmehr benötigt jegliche Abwandlung in der Bohrungsplatzierung einen gesonderten Adapter, was den Bauaufwand steigert, und eine Markeinführung verhindert.

Aus gattungsbildender DE 100 60 391 A1 geht bereits ein Aggregat der angegebenen Art hervor, dessen Leitungsanschlüsse mit Leitungsanschlussstücken verschraubt werden, die einen gleichen Durchmesser aufweisen. Die Leitungsanschlüsse dichten nach der Verschraubung mit den Leitungsanschlüssen gegeneinander ab, sofern jedes Leitungsanschlussstück dem zugehörigen Leitungsanschluss korrekt zugeordnet ist. Bei einer falschen Zuordnung kommt keine Abdichtung zwischen den Leitungsanschlussstücken und den Leitungsanschlüssen zustande, da die Leitungsanschlüsse unterschiedliche Einschraubtiefen aufweisen.

Es ist eine Aufgabe der vorliegenden Erfindung, eine flexible Lösung anzubieten, um ein stark miniaturisiertes Aggregat mit Anschraubkomponenten zu versehen, die selbst bei beengten Einbauverhältnissen günstig montierbar sind. Mit anderen Worten soll es die Erfindung ermöglichen, die Aufnahmebohrungen für Schraubarmaturen beliebig nah zueinander anordnen zu können, ohne die genannte Montageproblematik zu verursachen.

Die Aufgabe wird mit der Gesamtheit der Merkmale des Patentanspruchs 1 gelöst. Indem redundante Schlüsselflächenabschnitte axial im Abstand zueinander angeordnet sind, wird es beispielsweise weiterhin ermöglicht, dass die nahe am Aggregat angeordnete, gewissermaßen konventionelle, Schlüsselfläche mit großer Schlüsselweite für Ersatz- und Werkstattzwecke, also für Fälle dient, in denen kein automatisierter Schrauber mit dem passenden Werkzeug für die zweite Schlüsselfläche zur Verfügung steht. Mit anderen Worten steht die zweite Schlüsselfläche primär für Erstmontagezwecke bei einem Erstabnehmer zur Verfügung.

Weiterbildungen der Erfindung ergeben sich aus Unteransprüchen zusammen mit der Beschreibung und der Zeichnung. In der Zeichnung zeigt:
Fig. 1 bis 3 schematisierte Ansicht verschiedener Anordnungskonstellationen mit Schraubkopf bei gegebenem Hydraulikanschlussabstand A,
Fig. 4 bis 6 eine Ansichten einer Schraubarmatur mit zwei Schlüsselflächenabschnitten für jeden Hydraulikanschluss, und

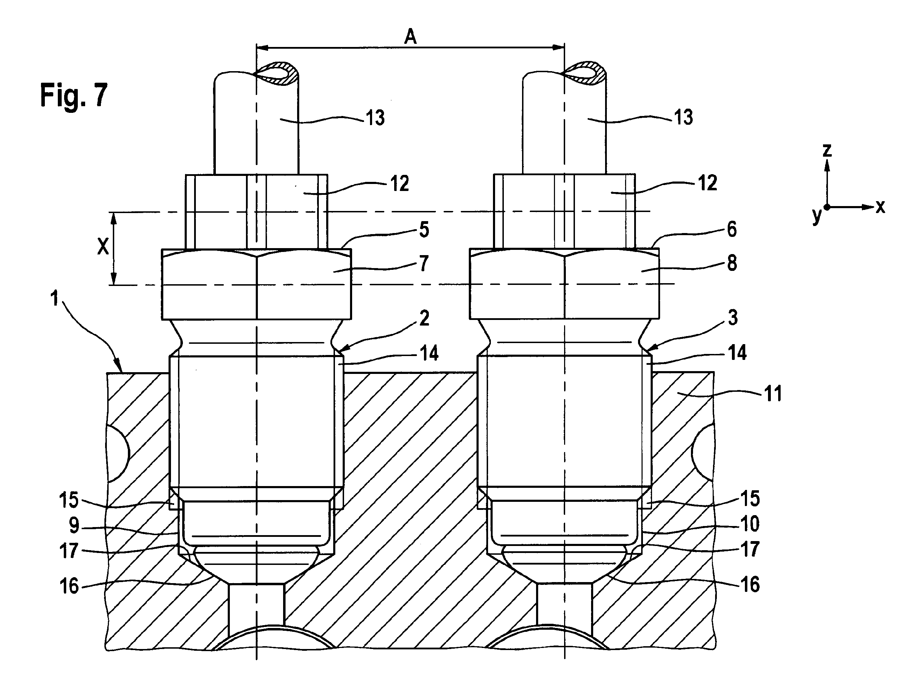

Fig. 7 Schnitt von einem Aggregat mit Schraubarmaturen nach Fig. 4 bis 6.

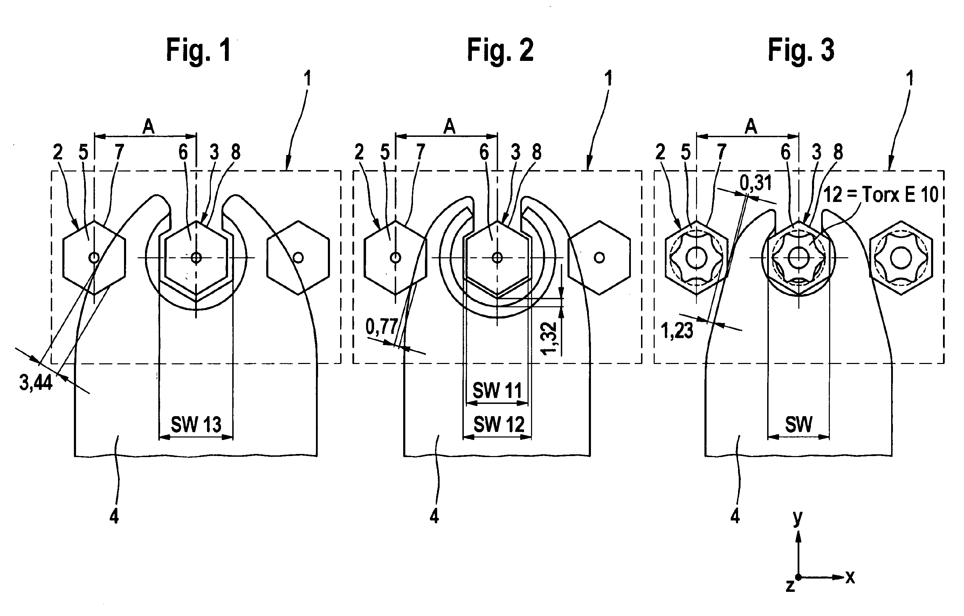

Gemäß Fig. 1 und 2 wird die Problematik eines mangelnden Montageraumes zum befestigen von Hydraulikanschlüssen 2,3 an einem elektrohydraulischen Aggregat 1 anhand von konventionellen, motorisierten Schraubern, von denen lediglich deren Schraubkopf 4 teilweise und schematisch dargestellt sind, exemplarisch verdeutlicht. An einem rudimentär skizzierten elektrohydraulischen Aggregat 1 sind Hydraulikanschlüsse 2,3 mit einem bestimmten Abstand A vorgesehen. Die Hydraulikanschlüsse 2,3 sind als Rohre 13 oder Schläuche ausgebildet, und umfassen eine Schraubarmatur 5,6 mit jeweils einem einzigen Schlüsselflächenabschnitt 7,8 von spezifischer Schlüsselweite. Die Schraubarmaturen 5,6 sind in Aufnahmebohrungen 9,10 von einem Aufnahmekörper 11 gesichert. Die Aufnahmebohrungen 9,10 sind, genauso wie die zugeordneten Schraubarmaturen 5,6, im Wesentlichen zueinander parallel. Die Fig. 1 verdeutlicht für eine gewählte Schlüsselweite SW 13, dass eine Überschneidung von 3,44 mm zwischen Schraubarmaturen 5,6 und Schraubkopf 4 vorliegt. Mit anderen Worten kann der Schraubkopf 4 unter Verwendung der notwendigen Werkzeuge nicht zwischen benachbarte Schraubarmaturen 5,6 eingeführt werden.

Die Fig. 2 zeigt für eine tendenziell verkleinerte Schlüsselweite SW 12, dass ein konventioneller Schraubkopf 4 nicht angesetzt werden kann, weil die Schraubarmaturen 5,6 benachbarter Hydraulikanschlüsse 2,3 im Bereich vom Schraubkopf 4 störend wirken, und dass eine Überschneidung von mindestens 0,77 mm vorliegt. Die Miniaturisierung des Aggregates 1 findet folglich eine Grenze in einem vordefinierten Abstand A, welcher von der genauen Gestaltung von Schraubköpfen 4 abhängt.

Fig. 3 stellt eine Variante mit einer Schraubarmatur 5 dar, bei der durch Auswahl eines - gegenüber Fig. 1 und 2 - in der Schlüsselweite SW weiter verkleinerten Schlüsselflächenabschnitts 7 (in Gestalt von einem Außensechskant), sowie unter Verwendung von einem zusätzlichen Schlüsselflächenabschnitt 12, durchaus ein Schraubkopf 4 angesetzt werden kann. Dabei verfügt der zusätzliche Schlüsselflächenabschnitt 12 bevorzugt über ein Innensechskant oder Innensternprofil, das zum Ansetzen des Schraubkopfes 4 ausgenutzt wird. Demgegenüber dient der andere Schlüsselflächenabschnitt 7 im wesentlichen zu manuellen Behelfszwecken.

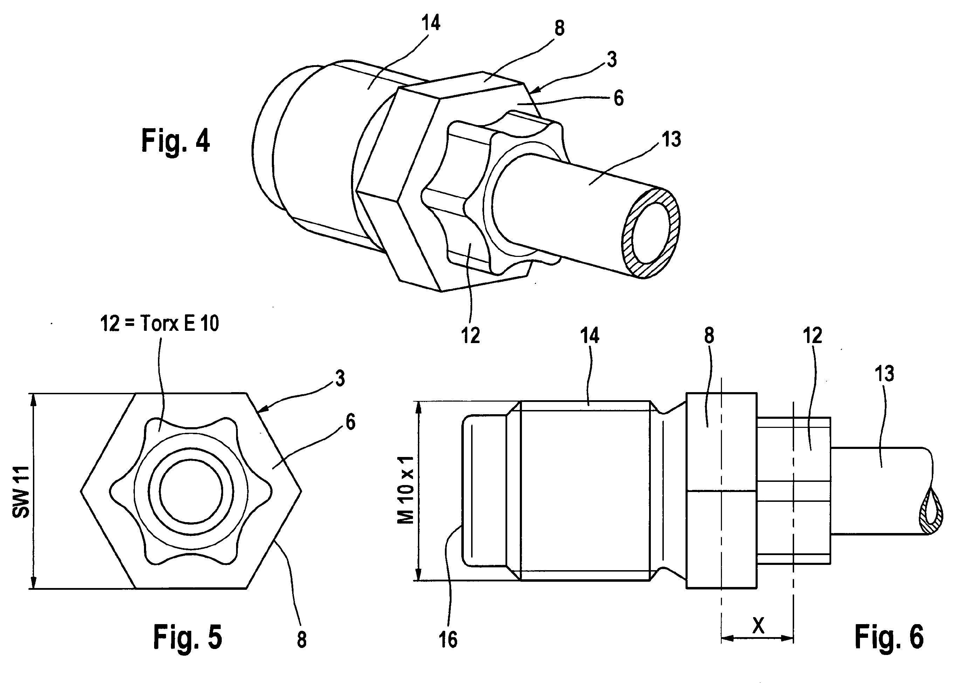

Die Fig. 4 bis 6 verdeutlichen im Einzelnen eine Variante einer Schraubarmatur 5 mit zwei unterschiedlich groß sowie axial im Abstand X zueinander ausgebildeten Schlüsselflächenabschnitten 7,12. Eine derartige Schraubarmatur 5 ist über ein Ende von einem Rohr 13 oder Schlauch gefädelt und dient der Befestigung am Aggregat 1. Die beiden Schraubarmaturen 2,3 sind jeweils als innen hohle Überwurfschraube mit einem Außengewinde 14 ausgebildet, welche das betreffende Leitungsende übergreift. Das Außengewinde 14 greift ferner in ein zugeordnetes Innengewinde 15 innerhalb der Aufnahmebohrung 9 von dem Aufnahmekörper 11.

Mit der Schraubarmatur 5 wird eine Dichtfläche der Schraubarmatur 5, oder eine Dichtfläche 16 von dem Rohr 13, gegen eine zugeordnete Dichtfläche 17 von dem Aufnahmekörper 11 gespannt. Zu diesem Zweck kann beispielsweise ein Rohrleitungsende einen prinzipiell genormten Bördel aufweisen. Durch die Schraubarmatur 5 wird die Dichtfläche 16 von dem Bördel zur Anlage an die zugeordnete Dichtfläche 17 von dem Aufnahmekörper 11 gepresst.

Wie insbesondere aus den Fig. 4 bis 6 ersichtlich ist, sind die beiden Schlüsselflächenabschnitte 7,12 in axialem Abstand X zueinander angeordnet. Beide Schlüsselflächenabschnitte 7,12 weisen unterschiedliche Schlüsselweiten SW auf. Wenn der dem Aufnahmekörper 11 nähere Schlüsselflächenabschnitt 7 eine größere Schlüsselweite SW aufweist, und als Außenschlüsselfläche ausgebildet ist, und der entfernte Schlüsselflächenabschnitt 12 eine kleinere Schlüsselflächen SW aufweist, vielleicht sogar als Innenschlüsselfläche (Innensechskant, Innenstern) ausgebildet ist, kann Abrutschen vermieden werden. Prinzipiell können die Schlüsselflächenabschnitte 7,8,12 jeweils als Innenschlüsselfläche oder als Außenschlüsselfläche ausgebildet sein. Für korrosionsgefährdete Anwendungen wird bevorzugt eine Außenschlüsselfläche eingesetzt, während eine Innenschlüsselfläche bevorzugt bei erhöhter Abrutschgefahr vorgesehen wird.

Prinzipiell sind benachbarte Schraubarmaturen 5,6 identisch ausgebildet. Zur Vermeidung von Verwechselungen bei der Montage der Hydraulikanschlüsse 2,3 ist es erfindungsgemäß jedoch vorgesehen, benachbarte Schraubarmaturen 5,6 unterschiedlich zu gestalten, und mit unterschiedlich gestalteten Schlüsselflächenabschnitten 7,8,12 zu versehen.

In weiter Ausgestaltung der Erfindung sind die, an einer Schraubarmatur 5,6 vorgesehenen, Schlüsselflächenabschnitte 7,8;12 unterschiedlich ausgebildet, wobei wenigstens eine der Schlüsselflächenabschnitte 7,8;12 aus den genannten Gründen als Innensechskant, Innenstern oder Vielzahn ausgebildet ist.

Des weiteren wird ein bevorzugt motorisch getriebenes Werkzeug (Schrauber) zum montieren der Schraubarmatur vorgeschlagen. Demnach weist das Werkzeug einen Werkzeugeinsatz auf, der eine Schlüsselweite aufweist, die der kleineren der beiden Schlüsselflächenabschnitte 7,8;12 an der Schraubarmatur 5,6 entspricht.

Im Prinzip besteht die Problemlösung in folgenden Merkmalen:
1. Ein erster, mehrfacher, Schlüsselflächenabschnitt 7,8, vorzugsweise eine ringförmig geschlossene Außentorx oder Innentorx-Schlüsselfläche;
2. In vorgegebenem Axialabstand X zu dem ersten, mehrfachen Schlüsselflächenabschnitt 7,8 einen zweiten Mehrfach-Schlüsselflächenabschnitt 12, vorzugsweise eine Sechskant-Schlüsselfläche, die ein behelfsmäßiges manuelles Anschrauben mit einfachen Mitteln ermöglicht.

Mit der beschriebenen Anordnung wird der besondere Vorteil erzielt, dass das Aufsetzen eines (Druckluft-) Schraubers auf einen Schlüsselflächenabschnitt 12 von der Schraubarmatur 5,6 vereinfacht wird, indem ein Abrutschen von dem Schlüsselflächenabschnitt 12 durch den darunter befindlichen Schlüsselflächenabschnitt 7,8(die Sechskant-Schlüsselfläche) zusätzlich verhindert wird.

Prinzipiell kann ein Werkzeug zum verschrauben auch so ausgebildet sein, dass die axial beabstandeten Schlüsselflächenabschnitte 7,8;12 gleichzeitig umgriffen werden, und dadurch an der Drehmomentübertragung teilnehmen, so dass sich eine verbesserte, und für die Schlüsselflächen 7,8;12 infolge größerer Verteilung schonendere Drehmomenteinleitung ergibt.

Die Vorteile bestehen in einer verbesserten Einleitung des Drehmoments → dadurch wird häufigeres An- und Abschrauben möglich.

Die beschriebene Anordnung ermöglicht es, ein bevorzugt motorgetriebenes Schraubwerkzeug durch eine axial gestufte, geschichtete Anordnung mehrerer Schlüsselflächen 7,8;12 in dessen Durchmesser zu verringern, und folglich bisher unerreicht kleine Abstände von Aufnahmebohrungen 9,10 für Hydraulikanschlüsse 2,3 zu realisieren, wobei die Schraubarmaturen 5,6 dennoch motorisch an einem Aggregat 1 angeschraubt werden können.

Eine andere davon unabhängige Lösung für das in Rede stehende Problem besteht darin, dass benachbarte Hydraulikanschlüsse 2,3 an dem Aggregat 1 mit unterschiedlich gestalteten Schraubarmaturen 5,6 ausgerüstet sind, welche jeweils lediglich einen einzigen Schlüsselflächenabschnitt 7,8 aufweisen, wobei sich die Schraubarmaturen 5,6 im übrigen lediglich darin unterscheiden, dass die Schlüsselflächenabschnitte 7,8 relativ zueinander axial in Richtung einer z-Koordinate zueinander versetzt angeordnet sind. Folglich sind benachbarte Schlüsselflächenabschnitte 7,8 nicht in einer gemeinsamen Ebene angesiedelt, sondern gewissermaßen in einer Tiefenrichtung (z-Koordinate) zueinander versetzt. Dieser Tiefenversatz kann erreicht werden, indem unterschiedlich lang ausgebildete Schraubarmaturen 5,6 mit entsprechend axial zueinander versetzten Schlüsselflächenabschnitten 7,8 vorgesehen sind, oder indem die Schraubarmaturen 5,6 identisch ausgebildet sind, während die Einschraubtiefe von unmittelbar benachbart vorgesehenen Hydraulikanschlüssen 2,3 zueinander variiert ist. Diese Variation ist durch Variation von deren Einschraubtiefe im Aufnahmekörper 11 herstellbar. Besonders vorteilhaft ist es in diesem Zusammenhang, wenn zwischen benachbarten Hydraulikanschlüssen 2,3 ausschließlich ein abwechselnder Versatz zwischen einer ersten Ebene und einer zweiten Ebene vorgesehen ist, so dass gewissermaßen zwei zueinander parallele, in z-Koordinatenrichtung zueinander versetzte, Montageebenen existieren. Durch die versetzte Anordnung der Schlüsselflächenabschnitte 7,8 an den Schraubarmaturen 5,6 wird sogar eine Codierung gegenüber Vertauschung erreicht. Denn unrichtige Paarungen zwischen Hydraulikanschluss 2,3 und Aufnahmebohrung 9,10 sind nur unter elastischer oder plastischer Deformation von dem betreffenden Hydraulikanschluss 2,3 in z-Koordinatenrichtung möglich. Alle weiteren Merkmale und Gestaltungen entsprechen denen der Figuren 1 bis 6, so dass diesbezüglich auf deren Beschreibung verwiesen wird, um unnötige Wiederholungen zu vermeiden.

### Bezugszeichenliste

- 1: Aggregat
- 2: Hydraulikanschluss
- 3: Hydraulikanschluss
- 4: Schraubkopf
- 5: Schraubarmatur
- 6: Schraubarmatur
- 7: Schlüsselflächenabschnitt
- 8: Schlüsselflächenabschnitt
- 9: Aufnahmebohrung
- 10: Aufnahmebohrung
- 11: Aufnahmekörper
- 12: Schlüsselflächenabschnitt
- 13: Rohr
- 14: Außengewinde
- 15: Innengewinde
- 16: Dichtfläche
- 17: Dichtfläche

- A: Abstand
- SW: Schlüsselweite
- X: Abstand
- x: Koordinate
- y: Koordinate
- z: Koordinate

## Patentansprüche

1. Aggregat (1), insbesondere elektrohydraulisches Aggregat, mit wenigstens zwei daran befestigter Hydraulikanschlüsse (2,3), insbesondere Rohr- oder Schlauchanschlüsse, die in einem definierten Abstand (A) weitgehend parallel zueinander vorgesehen sind, wobei zur Befestigung der Hydraulikanschlüsse (2,3) jeweils eine Schraubarmatur (5,6) vorgesehen ist, die relativ zu einem Rohr (13) oder Schlauch verdrehbar ist, und einen Schlüsselflächenabschnitt (7,8) aufweist, und ein Außengewinde (14) umfasst, welches innerhalb einer zugeordneten Aufnahmebohrung (9,10) in einem Innengewinde (15) vom Aufnahmekörper (11) derart aufgenommen ist, dass eine Dichtfläche von der Schraubarmatur (5,6) oder eine Dichtfläche (16) von dem Rohr (13) oder Schlauch auf einer Dichtfläche (17) von dem Aufnahmekörper (11) aufsitzt, **dadurch gekennzeichnet, dass** die Schraubarmatur (5,6) zusätzlich zu dem Schlüsselflächenabschnitt (7,8) einen weiteren Schlüsselflächenabschnitt (12) aufweist, wobei die Schlüsselflächenabschnitte (7,8;12) unterschiedliche Schlüsselweiten (SW) aufweisen, und dass unmittelbar benachbart angeordnete Hydraulikanschlüsse (2,3) unterschiedlich gestaltete Schraubarmaturen (5,6) aufweisen, die, bei grundsätzlich identischer Bauweise, unterschiedlich gestaltete Schlüsselflächenabschnitte (7,8,12) aufweisen.

2. Aggregat nach Anspruch 1, **dadurch gekennzeichnet, dass** die Schraubarmatur (5,6) als hohle Überwurfschraube ausgebildet ist, welche zumindest teilweise von dem Rohr (13) oder von dem Schlauch durchgriffen wird.

3. Aggregat nach Anspruch 1, **dadurch gekennzeichnet, dass** die beiden Schlüsselflächenabschnitte (7,8;12) in axialem Abstand (X) zueinander angeordnet sind.

4. Aggregat nach Anspruch 1,2 oder 3, **dadurch gekennzeichnet**, das die beiden Schlüsselflächenabschnitte (7,8;12) unterschiedliche Schlüsselweiten (SW) aufweisen, dass die Schlüsselflächenabschnitte (7,8;12) in Richtung einer Schlauchachse axial zueinander versetzt an der Schraubarmatur (5,6) angeordnet sind, und dass ein axial näher an dem Aufnahmekörper (11) angeordneter Schlüsselflächenabschnitt (7,8) eine Schlüsselweite (SW) aufweist, welche größer ausgebildet ist, als die Schlüsselweite (SW) von dem axial entfernten Schlüsselflächenabschnitt (12).

5. Aggregat nach einem oder mehreren der vorhergehenden Ansprüche, **dadurch gekennzeichnet, dass** zusätzliche Schlüsselflächenabschnitte (12) als Innenschlüsselflächen oder als Außenschlüsselflächen ausgebildet sind.

6. Aggregat nach einem oder mehreren der vorhergehenden Ansprüche, **dadurch gekennzeichnet, dass** die an einer Schraubarmatur (5,6) vorgesehenen Schlüsselflächenabschnitte (7;12) unterschiedlich ausgebildet sind, und dass wenigstens eine der Schlüsselflächenabschnitte (7;12) als Innensechskant, als Innenstern oder als Innen- oder Außenvielzahn ausgebildet ist.

## Claims

1. Unit (1), in particular an electrohydraulic unit, with at least two hydraulic connections (2, 3), in particular pipe or hose connections, fastened thereto, which hydraulic connections (2, 3) are provided substantially parallel one to another at a defined distance (A) from one another, a respective screw fitting (5, 6) for fastening the hydraulic connections (2, 3) being provided in each case, which screw fitting (5, 6) is rotatable relative to a pipe (13) or hose, has a spanner flat portion (7, 8) and includes an external thread (14) which is received in an internal thread (15) of an associated receiving bore (9, 10) of the receiving body (11) in such a manner that a sealing face of the screw fitting (5, 6) or a sealing face (16) of the pipe (13) or hose is seated on a sealing face (17) of the receiving body (11), **characterized in that** the screw fitting (5, 6) has in addition to the spanner flat portion (7, 8) a further spanner flat portion (12), the spanner flat portions (7, 8; 12) having different spanner widths (SW), and **in that** hydraulic connections (2, 3) arranged directly adjacently have differently configured screw fittings (5, 6) which, although of fundamentally identical construction, have differently configured spanner flat portions (7, 8, 12).

2. Unit according to Claim 1, **characterized in that** the screw fitting (5, 6) is in the form of a hollow male fitting through which the pipe (13) or the hose passes at least partially.

3. Unit according to Claim 1, **characterized in that** the two spanner flat portions (7, 8; 12) are arranged at an axial distance (X) from one another.

4. Unit according to Claim 1, 2 or 3, **characterized in that** the two spanner flat portions (7, 8; 12) have different spanner widths (SW), **in that** the spanner flat portions (7, 8; 12) are arranged on the screw fitting (5, 6) offset axially to one another in the direction of a hose axis, and **in that** a spanner flat portion (7, 8) arranged axially closer to the receiving body (11) has a spanner width (SW) which is configured larger than the spanner width (SW) of the spanner flat portion (12) arranged axially further away.

5. Unit according to one or more of the preceding claims, **characterized in that** additional spanner flat portions (12) are configured as internal spanner flats or external spanner flats.

6. Unit according to one or more of the preceding claims, **characterized in that** the spanner flat portions (7; 12) provided on a screw fitting (5, 6) are configured differently, and **in that** at least one of the spanner flat portions (7; 12) is in the form of an internal hexagon or an internal star or an internal or external multipoint.

## Revendications

1. Ensemble (1), en particulier ensemble électrohydraulique, sur lequel au moins deux raccordements hydrauliques (2, 3) largement parallèles l'un à l'autre, en particulier des raccordements pour tube ou tuyau flexible, sont fixés à une distance mutuelle définie (A), une armature filetée (5, 6) respective étant prévue pour fixer chacun des raccordements hydrauliques (2, 3) et pouvant tourner par rapport au tube (13) ou au tuyau flexible, présentant une partie (7, 8) de surface de clé et comportant un filet extérieur (14) qui est repris à l'intérieur d'un alésage de réception (9, 10) associé, dans un filet intérieur (15) du corps de reprise (11), de telle sorte qu'une surface d'étanchéité de l'armature filetée (5, 6) ou une surface d'étanchéité (16) du tube (13) ou du tuyau flexible repose sur une surface d'étanchéité (17) du corps de reprise (11), **caractérisé en ce que**
en plus d'une partie (7, 8) de surface de clé, l'armature filetée (5, 6) comporte une autre partie (12) de surface de clé et **en ce que** les parties (7, 8; 12) de surface de clé présentent des largeurs de clé différentes (SW) et
**en ce que** des raccordements hydrauliques (2, 3) disposés au voisinage direct l'un de l'autre présentent des armatures filetées (5, 6) de formes différentes qui, pour une structure fondamentalement identique, présentent des parties (7, 8, 12) de surface de clé de formes différentes.

2. Ensemble selon la revendication 1, **caractérisé en ce que** l'armature filetée (5, 6) est configurée comme écrou d'accouplement creux qui est traversé au moins en partie par le tube (13) ou par le tuyau flexible.

3. Ensemble selon la revendication 1, **caractérisé en ce que** les deux parties (7, 8; 12) de surface de clé sont disposées à distance axiale (X) l'une de l'autre.

4. Ensemble selon les revendications 1, 2 ou 3, **caractérisé en ce que** les deux parties (7, 8; 12) de surface de clé présentent des largeurs de clé (SW) différentes, **en ce que** les parties (7, 8; 12) de surface de clé sont décalées axialement l'une de l'autre sur l'armature filetée (5, 6) dans la direction de l'axe d'un tuyau flexible et **en ce qu'**une partie (7, 8) de surface de clé disposée axialement plus près du corps de reprise (11) présente une largeur de clé (SW) plus grande que la largeur de clé (SW) de la partie (12) de surface de clé éloignée axialement.

5. Ensemble selon l'une ou plusieurs des revendications précédentes, **caractérisé en ce que** les parties supplémentaires (12) de surface de clé sont configurées comme surface intérieure de clé ou comme surface extérieure de clé.

6. Ensemble selon l'une ou plusieurs des revendications précédentes, **caractérisé en ce que** les parties (7; 12) de surface de clé prévues sur une armature filetée (5, 6) ont des formes différentes et **en ce qu'**au moins l'une des parties (7; 12) de surface de clé est configurée comme clé creuse à six pans, étoile creuse ou denture intérieure ou extérieure.
